# EUROPEAN PATENT SPECIFICATION

(11) **EP 0 626 342 B1**
(45) Date of publication and mention of the grant of the patent: **15.10.1997**
(21) Application number: 94108305.7
(22) Date of filing: 27.05.1994
(51) Int. Cl.: C01B 15/013

(54) **Process for purification of hydrogen peroxide**
Verfahren zur Reinigung von Wasserstoffperoxyd
Procédé de purification d'eau oxygénée

(30) Priority: 28.05.1993 JP 127310/93
(43) Date of publication of application: 30.11.1994
(73) Proprietor: MITSUBISHI GAS CHEMICAL COMPANY, INC., Tokyo, 100 (JP)
(72) Inventor: Sugihara, Yasuo, c/o Mitsubishi Gas Chemical, Chiyoda-ku, Tokyo (JP); Tanaka, Kazushige, c/o Mitsubishi Gas Chemical, Katsushika-ku, Tokyo (JP); Sakaitani, Hisashi, c/o Mitsubishi Gas Chemical, Katsushika-ku, Tokyo (JP)
(74) Representative: Kraus, Walter, Dr.

(56) References cited:
- EP-A- 0 502 466
- FR-A- 2 624 500
- US-A- 5 200 166

## Description

### Industrially Applicable Field

This invention relates to a process for purification of hydrogen peroxide which comprises removing impurities existing in a very small quantity in an aqueous hydrogen peroxide solution, and particularly to a process for preparation of highly pure hydrogen peroxide usable for washing silicon wafers, etc.

### Prior Art

Basic or acidic aqueous hydrogen peroxide solutions are widely used for washing silicon wafers. It is necessary to use extremely highly pure aqueous hydrogen peroxide solutions for this use, and it is usually required that the concentration of impurities in the aqueous hydrogen peroxide solution is 1 ppb or less. When the densities of integrated circuits are high, the concentration is sometimes required to be 0.2 ppb or less, and sometimes to be 0.1 ppb or less.

As a process for purification of hydrogen peroxide, treatment with ion exchange resins is known, but for some impurities it is difficult to remove them completely singly by ion exchange resins. For example, it is extremely difficult to remove iron, aluminum, etc. up to 0.2 ppb or less. When these impurities are contained in washing chemicals, they adhere to silicon wafers and have a large influence on electric characteristics of semiconductors prepared from the silicon wafers, and therefore a purification technique superior to the prior techniques is desired.

The present inventors previously found a method of removing organic impurities from an aqueous solution of hydrogen peroxide, which comprises bringing an aqueous solution of hydrogen peroxide containing organic impurities into contact with a halogen-containing porous resin having a true specific gravity in the wet state of 1.1 to 1.3 (US Patent No. 4,792,403).

Shiga et al. found that a highly pure aqueous hydrogen peroxide solution can be prepared safely and inexpensively without lowering the ratio of removal of the strong acid anions and with lowering decomposition of hydrogen peroxide by an anion exchange resin, by removing, the anionic impurities using a bicarbonate salt type or carbonate salt type anion exchange resin and with continuous or semi-continuous addition of 0.1 to 5 milliequivalent/liter-aqueous hydrogen peroxide solution of an acid or its salt having an acid dissociation index pKa of 5 or less in water (Japanese Patent Application Kokai (Laid-Open) No. 17105/1993).

US-A-5 200 166 discloses the purification of hydrogen peroxide using a chelate resin.

However, even by these processes, it was difficult to remove iron and aluminum in an aqueous hydrogen peroxide solution up to 0.2 ppb or less.

### Problems to be Solved by the Invention

The object of this invention is to remove impurities from an aqueous hydrogen peroxide solution in high efficiency, and particularly to provide a practical purification technique which makes it possible to remove impurities such as iron and aluminum, which are removed only in low efficiency singly by ion exchange resins, in high efficiency up to a concentration of 0.2 ppb or less.

### Means for Solving the Problems

The present inventors intensely studied for attaining the above object, and as a result they found that impurities such as iron and aluminum, which can be removed only in low efficiency by ion exchange resins, can be removed in good efficiency by a process for the purification of hydrogen peroxide which comprises (A) contacting a crude hydrogen peroxide solution with an anion exchange resin or a mixture of anion exchange resin and a cation exchange resin to make a content of total phosphate anions of 0.1 ppm or less, and then (B) contacting the resultant hydrogen peroxide solution having a content of total phosphate anions of 0.1 ppm or less with a chelate resin.

Any chelate resin can be used as the chelate resin used in this invention so long as it is a resin having a chelating ability to metal ions, and includes an iminodiacetic type, polyamine type, phosphonic acid type and N-methylglucamine type chelate resin or the like, but particularly preferable is a phosphonic acid type chelate resin.

The phosphonic acid type chelate resin is a chelate resin in which a functional group having phosphonic acid group(s) was introduced, and particularly preferable is an iminomethylenephosphonic acid type chelate resin or iminodi(methylenephosphonic) acid type chelate resin having a group represented by the following formula in which a phosphonic acid group is bonded to a nitrogen atom via a methylene group. The phosphonic acid group is usually used in the form of a free acid, but can also be used in the form of a salt such as an ammonium salt. Phosphonic acid type chelate resins are particularly preferable in practical use since they do not considerably deteriorate when used for purification hydrogen peroxide for a long time.

-N(CH₂PO₃H₂)ₙ

wherein n denotes 1 or 2.

There in no particular limitation about the operation temperature in the purification process of this invention, but preferred operation temperature is -25 to 25°C, more preferably -15 to 15°C. It is possible to inhibit deterioration of the resin and maintain the activity of the resin for a longer time by making operation at a low temperature.

The purification process of this invention can be conducted by any of a batch method and a flow method, but the flow method is preferable from the aspect of purification efficiency. In the case of purification by the flow method, the liquid passing flow can be an ascending or a descending.

The concentration of hydrogen peroxide is not particularly limited, but an aqueous hydrogen peroxide solution of a concentration of 1 to 75, preferably 1 to 40 weight % is usually used.

It is possible to use, as the raw material aqueous hydrogen peroxide solution used in this invention, an aqueous hydrogen peroxide solution containing a nonphosphorus acidic compound such as sulfuric acid, hydrochloric acid or nitric acid or a salt thereof, or an aqueous hydrogen peroxide solution containing a stabilizer of hydrogen peroxide such as ethylenediaminetetraacetic acid or a salt thereof, besides an aqueous hydrogen peroxide solution not containing an additive.

It is particularly preferable to use as the raw material aqueous hydrogen peroxide solution an aqueous hydrogen peroxide solution having a content of total phosphate anions of 0.1 ppm or less. Impurities such iron and aluminum are particularly efficiently removed by contacting hydrogen peroxide having a content of total phosphate anions of 0.1 ppm or less with a chelate resin. The total phosphate anions include a phosphate anion and condensed phosphate anions represented by a pyrophosphate anion, and the content of the total phosphate anions means a total quantity thereof. The content of total phosphate anions is measured by the colorimetric method.

When an aqueous hydrogen peroxide solution having a content of total phosphate anions higher than 0.1 ppm, it is preferable to make the content of total phosphate anions 0.1 ppm or less by a pretreatment and then contact the solution with the chelate resin. The pretreatment includes a method which comprises contacting it with an ion exchange resin, a method utilizing distillation, or the like, but preferable is a method which comprises contacting it with an anion exchange resin or a mixture of an anion exchange resin and a cation exchange resin. An aqueous hydrogen peroxide solution having a content of total phosphate anions of 0.1 ppm or less can be purified by directly contacting it with the chelate resin.

### Examples

This invention is described below by examples. The content of total phosphate anions and metal were determined by the colorimetric method and the ICP-MS method (Inductively Coupled Plasma-Mass Spectrometry), respectively.

### Example 1

10 liters of 31 wt% raw aqueous hydrogen peroxide solution containing 20 ppb of aluminum and 0.1 ppm of total phosphate anions as impurities was passed through a Teflon-made column of inside diameter 15 mm and length 30 cm packed with 20 ml of Diaion CRA-100 (H type, made by Mitsubishi Kasei Corporation), an iminomethylenephosphonic acid type chelate resin, at a flow rate of a space velocity of 10 hr⁻¹.The column temperature was maintained at 5°C. The aluminum content after the purification was under 0.1 ppb, lower limit for the determination.

### Example 2

10 liters of 31 wt% raw aqueous hydrogen peroxide solution containing 20 ppb of aluminum and 10 ppm of total phosphate anions as impurities was passed through a Teflon-made column of inside diameter 15 mm and length 30 cm packed with 20 ml of an anion exchange resin Amberlite IRA-400 (bicarbonate salt type, made by Organo Corporation), at a flow rate of a space velocity of 10 hr⁻¹. The concentration of total phosphate anions in the aqueous hydrogen peroxide solution after the passing was 0.05 ppm. The resultant aqueous hydrogen peroxide solution was then passed through a Teflon-made column of inside diameter 15 mm and length 30 cm packed with 20 ml of Diaion CRA-100 (H type, made by Mitsubishi Kasei Corporation), an iminomethylenephosphonic acid type chelate resin, at a space velocity of 10 hr⁻¹. The column temperatures in both columns were maintained at 5°C. The aluminum content after the purification was under 0.1 ppb, lower limit for the determination.

### Comparative example 1

10 liters of 31 wt% raw aqueous hydrogen peroxide solution containing 20 ppb of aluminum and 10 ppm of total phosphate anions as impurities was purified under the same conditions as in Example 1. The aluminum content after the purification was 6 ppb.

### Example 3

One liter of 60 wt% raw aqueous hydrogen peroxide solution containing 2 ppb of iron, 30 ppb of aluminum and 0.02 ppm of total phosphate anions as impurities was purified under the same conditions as in Example 1. After the purification, the iron content was under 0.1 ppb, lower limit for the determination, and the aluminum content was under 0.1 ppb, lower limit for determination.

### Comparative example 2

One liter of 60 wt% raw aqueous hydrogen peroxide solution containing 2 ppb of iron, 30 ppb of aluminum and 0.02 ppm of total phosphate anions as impurities was passed through a Teflon-made column of inside diameter of 15 mm and length of 30 cm packed with 20 ml of a cation exchange resin Amberlite IR-120B (H type, made by Organo Corporation), at a space velocity of 10 hr⁻¹. The effluent was then passed through a Teflon-made column of inside diameter of 15 mm and length of 30 cm packed with 20 ml of an anionic exchange resin Amberlite IRA-400 (bicarbonate salt type, made by Organo Corporation), at a space velocity of 10 hr⁻¹ .The column temperatures in both columns were maintained at 5°C. After the purification, the iron content was 0.5 ppb and the aluminum content was 3 ppb.

### Example 4

200 liters of 31 wt% raw aqueous hydrogen peroxide solution containing 2 ppb of aluminum and 0.05 ppm of total phosphate anions as impurities was purified under the same conditions as in Example 1 except that the column temperature was maintained at 25°C. The aluminum content after the purification for 15 hours after the start of the passing was 0.1 ppb.

### Example 5

200 liters of 31 wt% raw aqueous hydrogen peroxide solution containing 2 ppb of aluminum and 0.05 ppm of total phosphate anions as impurities was passed through a Teflon-made column of inside diameter 15 mm and length 30 cm packed with 20 ml of Diaion CR-10 (H type, made by Mitsubishi Kasei Corporation), an iminodiacetic acid type chelate resin, at a space velocity of 10 hr⁻¹. The column temperature was maintained at 25°C. The aluminum content after the purification for 15 hours after the start of the passing was 0.14 ppb.

### Effect of the Invention

According to this invention, it is possible to remove impurities from an aqueous hydrogen peroxide solution in high efficiency, and particularly it is possible to remove therefrom impurities such as iron and aluminum, which are removed only in low efficiency singly by ion exchange resins, in high efficiency up to an extremely low concentration of 0.2 ppb or less, and sometimes to be 0.1 ppb or less.

Highly pure hydrogen peroxide obtained by this invention can suitably be used for washing silicon wafers, etc.

## Claims

1. A process for the purification of hydrogen peroxide which comprises (A) contacting a crude hydrogen peroxide solution with an anion exchange resin or a mixture of anion exchange resin and a cation exchange resin to make a content of total phosphate anions of 0.1 ppm or less, and then (B) contacting the resultant hydrogen peroxide solution having a content of total phosphate anions of 0.1 ppm or less with a chelate resin.

2. The process for purification of hydrogen peroxide according to claim 1 wherein the chelate resin is a phosphonic acid type chelate resin.

3. The process for purification of hydrogen peroxide according to claim 1 wherein the chelate resin is an iminomethylenephosphonic acid type chelate resin.

4. The process for purification of hydrogen peroxide according to claim 1 wherein the chelate resin is an iminodi(methylenephosphonic) acid type chelate resin.

5. The process for purification of hydrogen peroxide according to claim 1 wherein the operation is conducted at a temperature of -25°C to 25°C.

## Patentansprüche

1. Verfahren zur Reinigung von Wasserstoffperoxid, umfassend (A) die Behandlung der rohen Wasserstoffperoxidlösung mit einem Anionenaustauschharz oder einem Gemisch aus einem Anionenaustauschharz und einem Kationenaustauschharz, wobei der Gehalt an Gesamtphosphatanionen auf 0,1 ppm oder geringer eingestellt wird, und dann (B) Behandeln der entstehenden Wasserstoffperoxidlösung mit einem Gehalt an Gesamtphosphatanionen von 0,1 ppm oder weniger mit einem Chelatharz.

2. Verfahren zur Reinigung von Wasserstoffperoxid nach Anspruch 1, dadurch **gekennzeichnet,** daß das Chelatharz ein Chelatharz des Phosphonsäure-Typs ist.

3. Verfahren zur Reinigung von Wasserstoffperoxid nach Anspruch 1, dadurch **gekennzeichnet,** daß das Chelatharz ein Chelatharz des Iminomethylenphosphonsäure-Typs ist.

4. Verfahren zur Reinigung von Wasserstoffperoxid nach Anspruch 1, dadurch **gekennzeichnet,** daß das Chelatharz ein Chelatharz des Iminodi(methylenphosphon)säure-Typs ist.

5. Verfahren zur Reinigung von Wasserstoffperoxid nach Anspruch 1, dadurch **gekennzeichnet,** daß das Verfahren bei einer Temperatur von -25°C bis 25°C durchgeführt wird.

## Revendications

1. Procédé de purification de peroxyde d'hydrogène qui consiste (A) à mettre une solution brute de peroxyde d'hydrogène en contact avec une résine échangeuse d'anions ou avec un mélange de résine échangeuse d'anions et de résine échangeuse de cations afin de réaliser une teneur totale en anions phosphates de 0,1 ppm ou moins, puis (B) à mettre la solution résultante de peroxyde d'hydrogène ayant une teneur totale en anions phosphates de 0,1 ppm ou moins en contact avec une résine chélate.

2. Procédé de purification du peroxyde d'hydrogène selon la revendication 1, dans lequel la résine chélate est une résine chélate du type à acide phosphonique.

3. Procédé de purification du peroxyde d'hydrogène selon la revendication 1, dans lequel la résine chélate est une résine chélate du type à acide iminométhylènephosphonique.

4. Procédé de purification du peroxyde d'hydrogène selon la revendication 1, dans lequel la résine chélate est une résine chélate du type à acide iminodi(méthylènephosphonique).

5. Procédé de purification du peroxyde d'hydrogène selon la revendication 1, dans lequel l'opération s'effectue à une température de -25°C à +25°C.
